(19) Europäisches Patentamt

European Patent Office

Office européen des brevets

(11) **EP 4 723 048 A1**

(12) **EUROPEAN PATENT APPLICATION**

(43) Date of publication:
08.04.2026 Bulletin 2026/15

(21) Application number: 25203464.0

(22) Date of filing: **19.09.2025**

(51) International Patent Classification (IPC):
*G06T 17/00* (2006.01)   *G06T 19/00* (2011.01)
*G06T 15/06* (2011.01)

(52) Cooperative Patent Classification (CPC):
**G06T 15/06; G06T 17/00; G06T 19/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.10.2024 GB 202414455**

(71) Applicant: **Sony Interactive Entertainment Inc.
Tokyo 108-0075 (JP)**

(72) Inventor: **CERRATO, Maurizio
London, W1F 7LP (GB)**

(74) Representative: **Fish & Richardson P.C.
Highlight Business Towers
Mies-van-der-Rohe-Straße 8
80807 München (DE)**

(54) **METHODS AND APPARATUSES FOR 3D RENDERING**

(57) There is provided a computer-implemented method of generating a point cloud, the method comprising: receiving first data representing a 3D model, the 3D model comprising a plurality of surfaces; performing ray tracing from a camera view, wherein the ray tracing comprises defining one or more rays passing through a location of the camera view; determining one or more intersection locations, corresponding to the location of an intersection of a ray with one or more surfaces of the 3D model; and generating a point cloud representation of the 3D model from the one or more intersection locations.

```
┌──────────────────────────────────────────┐
│  (S100) Receive a 3D model               │
└──────────────────────────────────────────┘
                    │
                    ▼
┌──────────────────────────────────────────┐
│  (S102) Perform ray tracing from a       │
│         camera view                      │
└──────────────────────────────────────────┘
                    │
                    ▼
┌──────────────────────────────────────────┐
│  (S104) Determine intersection locations │
└──────────────────────────────────────────┘
                    │
                    ▼
┌──────────────────────────────────────────┐
│  (S106) Generate a point cloud           │
│         representation of the mesh       │
└──────────────────────────────────────────┘
```

FIG. 5

## Description

### FIELD OF THE INVENTION

The present invention relates to methods and apparatuses for rendering an image. More specifically, the present invention relates to methods and apparatuses for rendering an image on a computer in the context of a video game.

### BACKGROUND

The use of meshes to represent three-dimensional (3D) models and scenes has been commonplace in computer graphics since the birth of the field, due to their conceptual simplicity and the associated ease of rasterization. However, other representations, such as 3D "splatting" rendering techniques, have recently come to the fore. Many of these representations rely on "radiance fields" - 3D functions (fields) that evaluate to a colour and brightness (a radiance) of a particular point in a 3D scene.

3D Gaussian splatting (3DGS) is a radiance field rendering technique in which a scene is represented by the combination of many 3D Gaussian functions, the intensities of which are usually summed together, distributed throughout 3D space. These individual functions are commonly known as "points", forming a "point cloud". Summing up the colour of each individual point and the level of opacity defined by its respective Gaussian function results in an image that can be displayed to the user. The placement of individual Gaussian "splats" can be done by a designer or developer, or can be generated by an algorithm or machine learning process based on some input image, scene, mesh or concept.

However, the tools and techniques built up for producing 3D models in the form of meshes are not compatible with 3DGS approaches. Polygonal meshes are easy to design, create, texture and animate from scratch, using methods well understood by designers. These tools do not produce Gaussian splats or radiance fields. Further, there exists a vast library of existing 3D meshes, which it would be desirable to use with 3DGS approaches.

Accordingly, there is a need for a method of generating a point cloud that is compatible with existing approaches for creating 3D models.

### SUMMARY OF INVENTION

According to a first aspect, there is provided a computer-implemented method of generating a point cloud, the method comprising: receiving first data representing a 3D model, the 3D model comprising a plurality of surfaces; performing ray tracing from a camera view, comprising defining one or more rays passing through a location of the camera view; determining one or more intersection locations, corresponding to the location of an intersection of a ray with one or more surfaces of the 3D model; and generating a point cloud representation of the 3D model from the one or more intersection locations.

In some examples, the 3D model may comprise a mesh, the mesh comprising the vertices and surfaces of the 3D model. In other examples, the 3D model may comprise a series of curves which represent the surface of the 3D model, may be represented mathematically as a series of surfaces in space, or may have any other representation.

The camera view represents a point of view from which the rays are traced. The camera view may define a field of view, which may be a vertical or horizonal field of view, or a view frustum. The camera view may have a fixed position in space, *i.e.* a pre-determined static position in 3D space, or may move.

Each ray passes through a location of the camera view and extends towards the 3D model. A location of the camera view may be a single position in space, i.e. a 3D vector, or it may be a location in a range or region corresponding to the camera view. In some examples, the rays may be defined mathematically as straight lines passing through the camera view, and therefore may extend along an arbitrary distance. Further, in some examples, the rays may be truncated at a particular point or may have a particular length. There may be more than one camera view, with one or more rays passing through each of the camera views.

As the rays pass through the camera view and pass towards the 3D model, they may intersect the 3D model at one or more intersection locations, intersecting one or more surfaces of the 3D model. The ray may be truncated or terminated at a first intersection, or at any other intersection, or may not be truncated. Alternatively, or in addition, the rays may be reflected from the surfaces of the 3D model at the intersection location. Further, a ray may be reflected as a second ray, with the original ray continuing through the 3D model. This may be considered analogous to the processes of reflection and refraction of light, where a ray can be partially reflected from a surface, forming two rays. The intersection locations may be determined geometrically, using a mathematical definition of the ray and the 3D model, for example, using the "inside-outside test".

From the intersection locations, a point cloud representation of the 3D model is generated. The point cloud representation may be generated from all of the intersection locations, or may be generated from only a subset of the intersection locations. For example, only the first intersection location of each ray (i.e. the intersection location nearest to the camera view) may be considered when constructing the point cloud representation. Alternatively, or in addition, there may be filtering applied to select which intersection locations are considered, for instance, based on the proximity of other intersection locations, the number of intersection locations generated from a single ray, or any other arbitrary condition.

In some examples, the point cloud is generated by generating data corresponding to each point. Each point may have a location, an orientation, an extent function, a colour, colour data, or other quantities associated with it. These are calculated or generated at least in part based on the corresponding intersection location.

In general, the 3D model can comprise a plurality of vertices, from which are defined the surfaces of the 3D model. The surfaces of the 3D model may be any shape and may be all the same type of shape or may be different. In typical cases, the surfaces of the 3D model will be triangles, and the 3D model will be a triangulated 3D model.

The particular form of the points in the point cloud representation has a significant impact on the result. A flexible and performant type of point comprises a three-dimensional function to define the shape and location of the point. Accordingly, in some examples, generating a point cloud representation comprises generating a point in the point cloud located at a plurality of the intersection locations, the point comprising an extent defined by a three-dimensional extent function, centred on a centre point. In some examples, the centre point may be an intersection point.

In general, the extent of the points in the point cloud can be defined by any 3D function, for instance, an exponential function, a polynomial function, or a logarithmic function. However, in some examples, the extent of the points will comprise a 3D Gaussian function. In some examples, different types of function may be used for different points, in order to generate varied visual effects, but in most examples the same type of function will be used for every point.

In some examples, the value of the extent for a first point at a particular point in space, or the "rendering extent", defines the visibility of the first point at the particular point in space. In such a case, it defines the shape of the point. Further, it may define the region over which the colour of the point is rendered.

Therefore, in some examples, the extent function comprises a three-dimensional Gaussian function. The Gaussian function, often referred to simply as a Gaussian, is a mathematical function of the form

$$f(x) = \exp(-x^2),$$

where exp represents the exponential function. Such a Gaussian may be parametrised with various (real) constants in one dimension, giving the form

$$f(x) = a \exp(-(x - b)^2/c)$$

where $a$ and $b$ are arbitrary real constants, and $c$ is an arbitrary non-zero real constant. The Gaussian may be extended into three dimensions with a parametrisation

$$f(x) = a \exp\left(-\frac{1}{2} x^T \Sigma^{-1} x\right)$$

where $a$ is an arbitrary real constant, $x$ is a 3D vector, $x^T$ is the transposition of $x$, and $\Sigma^{-1}$ is the inverse of a positive-definite $3 \times 3$ matrix.

The use of 3D Gaussians to define the extent of the points of the point cloud has several advantages. The Gaussian is a function with a well known and easily calculable derivative, which allows for efficient optimization of the point cloud to a desired input image. Further, Gaussians can be easily projected to the 2D plane, allowing for efficient rasterization and rendering of the final image.

In order to create an accurate point cloud representation of an arbitrary 3D model, it can be advantageous to trace rays from multiple viewports. Accordingly, in some examples, the ray tracing may be performed from a plurality of camera views. This may improve the accuracy of the point cloud representation when using a 3D model with a complex shape, for example, a 3D model with a concave portion.

In some examples, the camera views are located on a bounding surface, the bounding surface enclosing the 3D model. The use of a bounding surface helps to ensure that the camera views surround the 3D model fully and therefore helps to generate an accurate representation. Furthermore, it simplifies the selection of camera view locations and allows for the automated placement of camera views. In some examples, an orientation of the camera view, or the direction the rays are cast, may be selected based on a vector normal to the bounding surface at the location of the camera view.

In order to simplify the selection of camera view locations, in some examples, the bounding surface may be a bounding sphere of the 3D model. A bounding sphere ensures that all the camera views are equidistant from the centre of the 3D model, and thus helps to ensure the homogeneous spacing of intersection locations. The bounding sphere may be of a minimal radius, *i.e.* a radius as small as possible while still enclosing all of the 3D model, or the bounding sphere may be smaller or larger.

To further improve the accuracy of the generated point cloud representation, in some examples, the camera views are located on a grid on the bounding surface, such that the bounding surface is evenly sampled by the camera views. In other words, the spacing of each camera view from its nearest neighbours is approximately equal, dependent on the number of camera views used. The grid may be a square grid, or formed from the vertices of a number of tessellating shapes, or be an arbitrary regular or irregular arrangement.

Alternatively, or in addition, the ray tracing may be performed from a plurality of camera views, wherein the camera views are located on a three-dimensional grid, the grid at least partially overlapping the 3D model. In such examples, the camera views are not arranged circumferentially around the 3D model, but instead, are arranged at various distances from the centre of the 3D model, which may include inside the 3D model. This may improve the accuracy of the point cloud representation for a 3D model of complex shape, containing enclosed or concave portions.

The grid may be a regular grid, with the camera views placed at regular intervals along axes. In other examples, the grid may be an irregular grid, without fixed spacing between the camera views. The grid may be repeating or non-repeating, such that the camera views form a regular or irregular array of elements.

In some examples, the extent function of a point corresponding to a first intersection location is determined based on the proximity of the first intersection location to each other intersection location. The determination of the extent function may, in some cases, be the selection of an appropriate function, such as a Gaussian function, a polynomial function, an exponential function, a sigmoid function, or another arbitrary function.

In other examples, the class or type of the function is fixed. For instance, all the points may have extents defined by Gaussian functions. In such examples, the extent function is determined by choosing parameters or prefactors of the function, such as the constants $a$, $b$, and $c$ in the Gaussian function given above. The extent function may be determined in order to choose an appropriate size for the point, based upon how many other points are located close by. The size of the point may be maximised in order to fill the space between it and the nearest other points, or, in other examples, the point may have an extent function chosen to give it a particular shape.

In order to accurately represent a 3D model which comprises colour or texture data, in some examples, each point further comprises colour data, comprising an opacity, defining a colour to be rendered over the extent. In some examples, the value of the extent function, or a function or transformation of the value of the extent function, is used as the opacity.

When the point comprises colour data, this data may be encoded in such a way that it allows for a non-constant colour over the whole extent. One method of encoding a colour that varies over the point is to use colour data which comprises a spherical harmonic. In this case, one or more spherical harmonics may be used - in other words, spherical harmonics may be used as "basis functions". Alternatively, a different basis function may be used, such as providing different colours based on a polynomial series.

In some cases, it may be advantageous for the opacity of the points to be distinct or different from the shape of the extent function. Therefore, in some cases, the colour contribution comprises an exponential falloff in opacity from the centre point. In some examples, the extent function is used with a "cut off" value, or in other words, some threshold value, where the portion of the extent function with a value below the cut off value is fully transparent, and the remaining portion is opaque. In such an example, an exponential falloff in opacity can be also used, providing the remaining portion with a varying opacity instead of being fully opaque.

In order to determine the colour data corresponding to each point, it may be sampled from the 3D model, allowing for the use of existing texturing approaches. Accordingly, in some examples, the 3D model comprises texture data, and the colour data of each point is determined based on the texture data.

In some applications, such as video games and media creation, animated 3D modeles are used to provide motion and deformation of the 3D model over time. To enable the use of point clouds in this context, in some examples, the method may further comprise receiving second data representing an animation of the 3D model, the animation comprising at least one frame; and generating a point cloud representation of the 3D model at each frame of the animation.

The animation of the 3D model may comprise armatures or a skeleton, with which the 3D model is "rigged". The animation may comprise positions of armatures frame by frame, or may utilise keyframes, interpolation or tweening. Therefore, in some cases, the second data further comprises a plurality of armatures, the frame comprising position information of the plurality of armatures, wherein the armatures deform the 3D model.

Alternatively, or in addition, the animation may be node-based or procedurally generated. The animation data may be created as keyframes or poses, or may be generated from video or motion capture. The animation data may comprise simulation of physics elements, such as cloth or hair simulation.

In some examples, a new point cloud may be generated for each frame of the animation. Such a point cloud may not have a correspondence between any particular point in the point cloud representation of a first frame, and another point in the point cloud representation of a second frame.

Alternatively, in some examples, the point cloud representation is generated for frames of the animation such that there is a correspondence between a first point in the point cloud representation of the first frame, and a second point in the point cloud representation of the second frame. This may allow for generation of fewer point cloud representations, allowing for interpolation or tweening between the first point and the second point. Accordingly, the method may further comprise transforming a first point in the point cloud representation of the 3D model according to a first frame of the animation to a second point in the point cloud representation of the 3D model according to a second frame of the animation.

This would reduce the amount of data stored, as the interpolation can be performed at an arbitrary frame rate, rather than needing to store a point cloud for each frame of the animation at the desired frame rate. The transformation may comprise transforming the position of the first point, in other words, moving it in space. Alternatively, or in addition, the transformation may comprise transforming the extent function of the point, by, for example, modifying the coefficients a, b and c of the Gaussian. Alternatively, or in addition, the transformation may comprise transforming the colour of the point, which may comprise transforming the colour data or a spherical harmonic representation of the colour data.

These transformations may be linear interpolations between the values of the first point in the first point cloud, and the second point in the second point cloud, or they may be more complex interpolations or tweenings, such as non-linear interpolation.

## BRIEF DESCRIPTION OF DRAWINGS

An example process and an example apparatus are described in detail herein with reference to the accompanying figures, in which:

Figure 1 shows a schematic of an example point in a point cloud;
Figure 2 shows a schematic of an example 3D model;
Figure 3 shows a schematic of an example process;
Figure 4 shows a schematic of an example process; and
Figure 5 shows a schematic of an example process.

## DETAILED DESCRIPTION

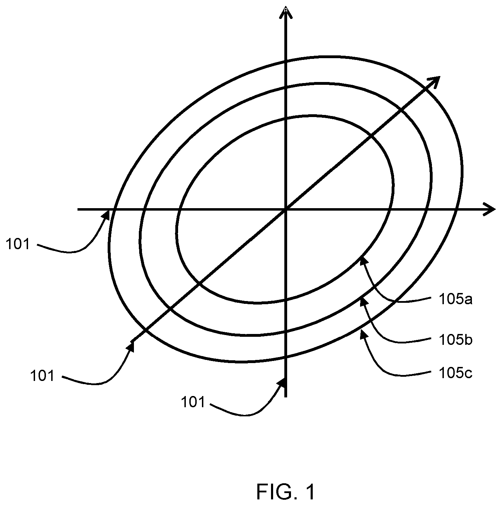

An example schematic of a point which may form part of a point cloud for rendering an image is generally illustrated in Figure 1. Axes 101 are shown to indicate the three dimensions with respect to which the point is defined. The point shown has a visible extent defined by a 3D Gaussian function. The value of the Gaussian function is greater towards the origin of the axes, and lesser further away from the center. This is illustrated by the three concentric shapes 105a-c, showing the shape formed by plotting a surface where the extent function equals 0.25, 0.5, and 0.75 respectively.

When used to render an image, the value of the extent function is used as a modifier to the opacity of the point - the higher the value, the more opaque the point. In this case, the opacity is taken directly as the value of the extent function, which is defined to fall between 0 (fully transparent) and 1 (fully opaque).

The point has a colour defined by a sum of spherical harmonics, defining the visible colour over the extent, which is multiplied by the value of the extent function to result in an opaque colour at the centre and a transparent colour further from the centre.

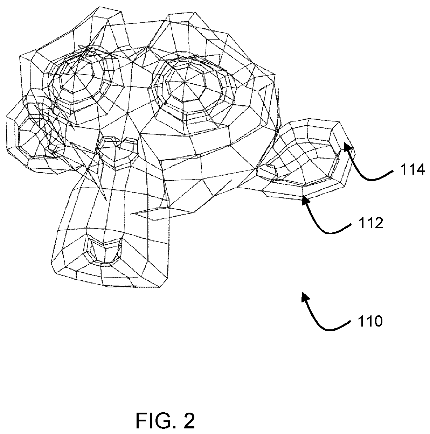

An example schematic of a 3D model is generally illustrated 100 in Figure 2. In this example, the 3D model comprises a mesh, which comprises vertices 112 and surfaces 114. This model has a complex shape, comprising concave and convex regions. The surfaces are all connected to each other to form a continuous surface, though, in other examples, this is not the case.

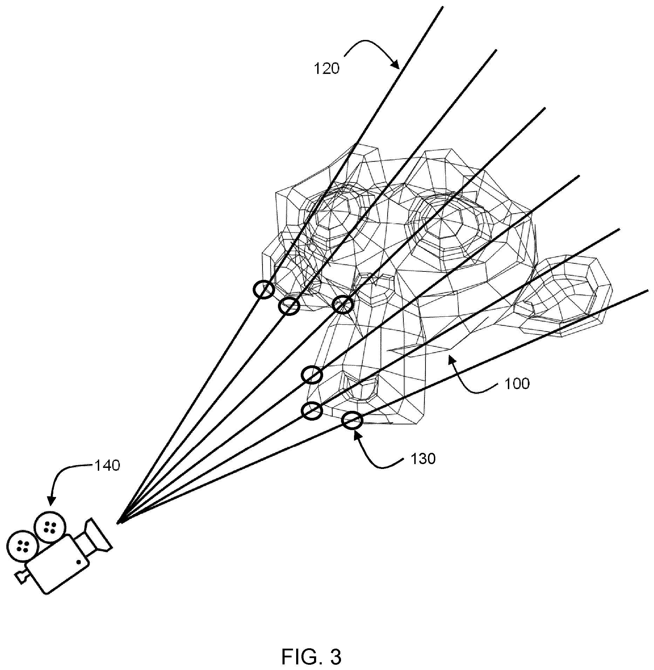

An example schematic of a process is generally illustrated in Figure 3. The 3D model 100 again comprises a mesh, which is arranged with respect to a camera view 140, shown schematically as a classic camera icon. It should be understood that the camera view can comprise only a location in 3D space and does not correspond to a physical camera. A plurality of rays 120 pass through the camera view, extending towards the mesh. While the rays 120 are shown as having limited length, it should be understood that this is not a requirement, and the rays may be defined mathematically and thus may extend an arbitrary distance, or an infinite distance.

The rays are traced from the camera view towards the mesh, which they intersect with at a number of intersection locations, which are marked in the figure with circles 130. In this case, only the first intersection of a particular ray with the mesh is considered as an intersection location, though, in other examples, multiple intersections from the same ray may form intersection locations.

In this example, the 3D model comprises a texture applied to the mesh. The surfaces of the mesh map to a particular part of the texture, though, in some cases, the same texture may be applied to all surfaces of the mesh. The texture of the mesh is sampled at each of the intersection points 130, to determine the colour of the mesh at each of the intersection points.

Alternatively, in some examples, the mesh may not be textured, and may comprise a colour or material specified separately, or may have no colour data at all. In some examples, one or more shaders may be used to determine the colour of the 3D model at a particular intersection point.

Further, in some examples, more than one sample of the colour of the mesh may be made. The texture may be sampled multiple times at different locations around the intersection point. These multiple samples may be used to construct colour data for the generated point corresponding to this intersection point, which may comprise spherical harmonics. This may allow for the generated point to represent the colours of the mesh better, with angular or spatial dependence of the colour of the generated point.

A point cloud representation is then generated, comprising a point at each of the intersection locations. Of course, in some examples, not all of the intersection locations will be used. The intersection locations may be combined based on proximity, in order to avoid placing points too close to each other. Alternatively, intersection locations may be removed based on proximity or any other factor.

The point cloud representation of the 3D model is then generated based on the intersection locations and the sampled colour of the mesh at the intersection locations. In this case, the points comprise a 3D extent function, which is in this case a 3D Gaussian function, centred on a centre point. The parametrisation of the extent function of the point for a first intersection location is determined, in part, based on the proximity of the other intersection locations to the first intersection location. In other examples, the parametrisation of the extent function may depend on the curvature of the surface of the 3D model, the angle between the camera view and the intersection point with respect to the centre of the 3D model, or other geometric considerations. The colour of each point in the point cloud is determined based on the sampled colour of the mesh at the intersection location.

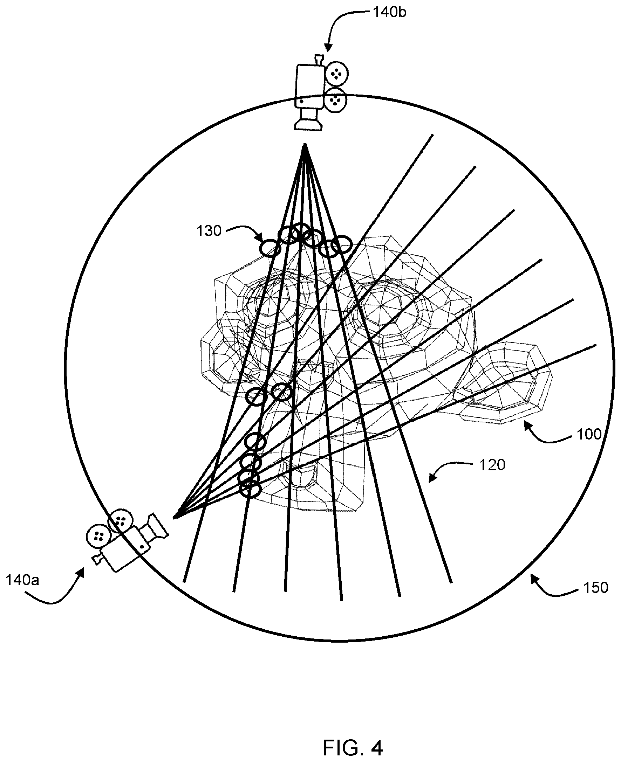

A schematic of an example method is generally illustrated in Figure 4. A 3D model 100 comprises a mesh, of which a point cloud representation is generated. In this example, there are two camera views 140a, 140b present, from which a plurality of rays 120 are cast. In this example, the rays are depicted as all originating from a single point arranged at either of the two cameras, though it should be understood that the rays do not necessarily have to have a well-defined start or end point, or may start or end at other locations than shown in this schematic diagram.

The camera views 140a, 140b are located on a bounding sphere 150. The bounding sphere contains ("bounds") the 3D model 100. In this example, the bounding sphere is not a minimal bounding sphere, as it is not the smallest possible bounding sphere which contains the 3D model. However, in some examples, a minimal bounding sphere may be used.

The rays 120 pass through the camera views 140a, 140b at arbitrary angles, such that they can intersect with as much of the surface of the mesh as is possible. In some cases, the angle of the rays with respect to the centre of the 3D model may be limited, for instance, by ensuring that all the rays pass perpendicular, or normal, to the bounding sphere.

The rays 120 intersect with the mesh at a number of intersection locations, which are again marked in the figure with circles 130. In this case, only the first intersection of a particular ray with the mesh is considered as an intersection location, though, in other examples, multiple intersections from the same ray may form intersection locations.

The point cloud is generated as discussed above for Figure 3, where a plurality of points are created corresponding to the intersection locations and the colour of the texture of the mesh at the intersection locations. For brevity, this discussion is not repeated.

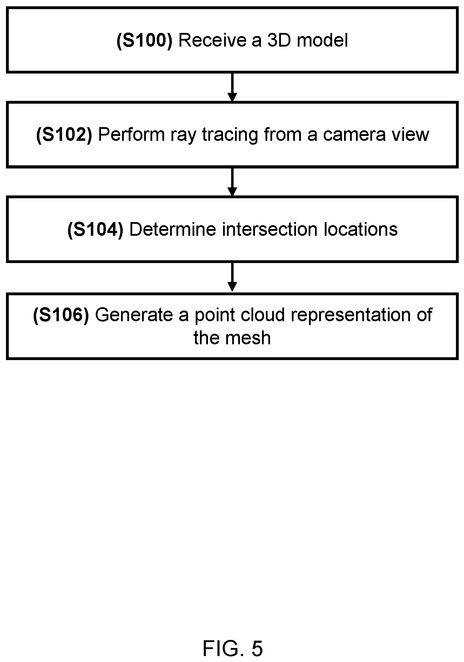

In Figure 5, a flow diagram of an example method is shown. In step S100, a 3D model is received. This mesh is received as first data representing a 3D model, the 3D model comprising a plurality of surfaces.

In step S102, ray tracing is performed from a camera view. This involves the casting of one or more rays through a camera view, arranged at a distance from the 3D model, towards the 3D model, such that one or more of the rays intersects the 3D model.

In step S104, the intersection locations of the rays are determined. In other words, one or more of the rays intersect the 3D model in different places, and these places are found.

In step S106, a point cloud representation of the mesh is determined. At each of the intersection locations, a point is created in the point cloud. Each point may be of a particular size and shape, which may be determined by an extent function of the point, which is in turn determined at least in part by the corresponding intersection location.

## EMBODIMENTS

Although the present invention is defined in the claims, it should be understood that the present invention can also (alternatively) be defined in accordance with the following embodiments

    1. A computer-implemented method of generating a point cloud, the method comprising:

        receiving first data representing a 3D model, the 3D model comprising a plurality of surfaces;
        performing ray tracing from a camera view, wherein the ray tracing comprises defining one or more rays passing through a location of the camera view;
        determining one or more intersection locations, corresponding to the location of an intersection of a ray with one or more surfaces of the 3D model; and
        generating a point cloud representation of the 3D model from the one or more intersection locations.

    2. The method of embodiment 1, wherein the ray tracing is performed from a plurality of camera views.

    3. The method of embodiment 2, wherein the camera views are located on a bounding surface, the bounding surface enclosing the 3D model.

    4. The method of embodiment 2, wherein the bounding surface is a bounding sphere of the 3D model.

    5. The method of embodiment 2 or embodiment 3, wherein the camera views are located on a grid on the bounding surface, such that the bounding surface is evenly sampled by the camera views.

    6. The method of embodiment 1, wherein the ray tracing is performed from a plurality of camera views, wherein the camera views are located on a three-dimensional grid, the grid at least partially overlapping the 3D model.

    7. The method of any preceding embodiment, wherein generating a point cloud representation comprises generating a point in the point cloud located at a plurality of the intersection locations, the point comprising an extent defined by a three-dimensional extent function, centred on a centre point.

8. The method of embodiment 6, wherein the extent function is a three-dimensional Gaussian function.

9. The method of embodiment 7 or embodiment 8, wherein the extent function of a point corresponding to a first intersection location is determined based on the proximity of the first intersection location to each other intersection location.

10. The method of any one of embodiments 7 to 9, wherein each point further comprises colour data, comprising an opacity, defining a colour to be rendered over the extent.

11. The method of embodiment 10, wherein the colour data comprises a spherical harmonic.

12. The method of embodiment 10 or embodiment 11, wherein the colour contribution comprises an exponential falloff in opacity from the centre point.

13. The method of any one of embodiments 10 to 12, wherein the 3D model comprises texture data, and the colour data of each point is determined based on the texture data.

14. The method of any preceding embodiment, wherein the 3D model comprises a mesh.

15. The method of any preceding embodiment, further comprising:

receiving second data representing an animation of the 3D model, the animation comprising at least one frame; and
generating a point cloud representation of the 3D model at each frame of the animation.

16. The method of embodiment 15, wherein the second data further comprises a plurality of armatures, the frame comprising position information of the plurality of armatures, wherein the armatures deform the 3D model.

17. The method of embodiment 15 or embodiment 16, further comprising transforming a first point in the point cloud representation of the 3D model according to a first frame of the animation to a second point in the point cloud representation of the 3D model according to a second frame of the animation.

18. A computer-readable storage medium containing instructions which, when executed by a computer, cause it to carry out the method of any preceding embodiment.

19. An apparatus, comprising a processor, wherein the processor is configured to perform the method of any preceding embodiment.

**Claims**

1. A computer-implemented method of generating a point cloud, the method comprising:

receiving first data representing a 3D model, the 3D model comprising a plurality of surfaces;
performing ray tracing from a camera view, wherein the ray tracing comprises defining one or more rays passing through a location of the camera view;
determining one or more intersection locations, corresponding to the location of an intersection of a ray with one or more surfaces of the 3D model; and
generating a point cloud representation of the 3D model from the one or more intersection locations.

2. The method of claim 1, wherein the ray tracing is performed from a plurality of camera views.

3. The method of claim 2, wherein the camera views are located on a bounding surface, the bounding surface enclosing the 3D model.

4. The method of claim 2, wherein the bounding surface is a bounding sphere of the 3D model.

5. The method of claim 2 or claim 3, wherein the camera views are located on a grid on the bounding surface, such that the bounding surface is evenly sampled by the camera views.

6. The method of claim 1, wherein the ray tracing is performed from a plurality of camera views, wherein the camera views are located on a three-dimensional grid, the grid at least partially overlapping the 3D model.

7. The method of any preceding claim, wherein generating a point cloud representation comprises generating a point in the point cloud located at a plurality of the intersection locations, the point comprising an extent defined by a three-dimensional extent function, centred on a centre point; optionally wherein the extent function is a three-dimensional Gaussian function.

8. The method of claim 7, wherein the extent function of a point corresponding to a first intersection location is determined based on the proximity of the first intersection location to each other intersection location.

**9.** The method of any one of claims 7 or 8, wherein each point further comprises colour data, comprising an opacity, defining a colour to be rendered over the extent.

**10.** The method of claim 9, wherein the colour data comprises a spherical harmonic; and/or wherein the colour contribution comprises an exponential falloff in opacity from the centre point; and/or wherein the 3D model comprises texture data, and the colour data of each point is determined based on the texture data.

**11.** The method of any preceding claim, wherein the 3D model comprises a mesh.

**12.** The method of any preceding claim, further comprising:

> receiving second data representing an animation of the 3D model, the animation comprising at least one frame; and
> generating a point cloud representation of the 3D model at each frame of the animation; optionally wherein the second data further comprises a plurality of armatures, the frame comprising position information of the plurality of armatures, wherein the armatures deform the 3D model.

**13.** The method of claim 12, further comprising transforming a first point in the point cloud representation of the 3D model according to a first frame of the animation to a second point in the point cloud representation of the 3D model according to a second frame of the animation.

**14.** A computer-readable storage medium containing instructions which, when executed by a computer, cause it to carry out the method of any one of the preceding claims.

**15.** An apparatus, comprising a processor, wherein the processor is configured to perform the method of any one of claims 1 to 13.

FIG. 1

114

112

110

FIG. 2

FIG. 3

FIG. 4

(S100) Receive a 3D model

(S102) Perform ray tracing from a camera view

(S104) Determine intersection locations

(S106) Generate a point cloud representation of the mesh

FIG. 5

Europäisches Patentamt
European Patent Office
Office européen des brevets

## EUROPEAN SEARCH REPORT

**Application Number**

EP 25 20 3464

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARVIE JEAN-EUDES ET AL: "Crafting the MPEG metrics for objective and perceptual quality assessment of volumetric videos", QUALITY AND USER EXPERIENCE, vol. 8, no. 1, 6 June 2023 (2023-06-06), XP093340468, ISSN: 2366-0139, DOI: 10.1007/s41233-023-00057-4 | 1-5, 11-15 | INV. G06T17/00 G06T19/00 G06T15/06 |
| A | * abstract * * page 4: section: Mesh surface sampling; figure 5 * | 6-10 | |
| A | Scolari Stefano: "Mesh2Splat: Gaussian Splatting from 3D Geometry and Materials", , 1 January 2024 (2024-01-01), XP093312245, Retrieved from the Internet: URL:https://kth.diva-portal.org/smash/get/diva2:1934675/FULLTEXT01.pdf * abstract * * sections 1.2, 2.4.7, 5.3 * | 1-15 | |
| A | GUEDON ANTOINE ET AL: "SuGaR: Surface-Aligned Gaussian Splatting for Efficient 3D Mesh Reconstruction and High-Quality Mesh Rendering", 2024 IEEE/CVF CONFERENCE ON COMPUTER VISION AND PATTERN RECOGNITION (CVPR), IEEE, 16 June 2024 (2024-06-16), pages 5354-5363, XP034694371, DOI: 10.1109/CVPR52733.2024.00512 [retrieved on 2024-09-16] * abstract * | 1-15 | TECHNICAL FIELDS SEARCHED (IPC) G06T |

The present search report has been drawn up for all claims

| Place of search | Date of completion of the search | Examiner |
|---|---|---|
| Berlin | 27 November 2025 | Gao, Miao |